# EUROPEAN PATENT APPLICATION

(11) **EP 3 795 455 A1**
(43) Date of publication of application: **24.03.2021**
(21) Application number: 20196138.0
(22) Date of filing: 15.09.2020
(51) Int. Cl.: B62D 5/04

(54) **TURNING DEVICE**

(30) Priority: 19.09.2019 JP 2019170677
(71) Applicant: JTEKT CORPORATION, Chuo-ku, Osaka-shi, Osaka 542-8502 (JP)
(72) Inventor: FURUYOSHI, Masakazu, Osaka-shi,, Osaka 542-8502 (JP)
(74) Representative: Winter, Brandl, Fürniss, Hübner, Röss, Kaiser, Polte - Partnerschaft mbB

(57) **Abstract**

A turning device (100) includes: a motor (110) configured to generate a drive force for independently steering a steered wheel (200); a speed reducer (120) connected to a rotary shaft body (111) of the motor (110); and an overload protection device (130) configured to block transfer of torque between the motor (110) and the speed reducer (120) in the case where an overload occurs.

## Description

### BACKGROUND OF THE INVENTION

### 1. Field of the Invention

The present invention relates to a turning device that independently steers steered wheels of a vehicle.

### 2. Description of Related Art

There has hitherto been a so-called steer-by-wire system, as a steering system for an automobile, in which steered wheels are steered based on information that indicates a steering angle with no mechanism that mechanically transfers torque between a steering wheel and the steered wheels. There is also proposed a steer-by-wire system of a right-left independent steering type in which right and left steered wheels are steered by separate motors with no mechanical link interposed between the right and left steered wheels (see Japanese Unexamined Patent Application Publication No. 2018-58484 (JP 2018-58484 A), for example).

### SUMMARY OF THE INVENTION

In the case of the steer-by-wire system of the right-left independent steering type, however, a steering operation mechanism including a motor, a speed reducer, etc. must be disposed for each of the steered wheels, and therefore it is desirable that the steering operation mechanism should be small. However, the turning device may be damaged if an abrupt reverse input is input from the steering operation mechanism such as when a steered wheel is hit by a curb.

The present invention provides a turning device that can avoid being damaged even in the case where an unexpected abrupt reverse input is input from a steering operation mechanism.

An aspect of the present invention provides a turning device including: a motor configured to generate a drive force for independently steering a steered wheel; a speed reducer connected to a rotary shaft body of the motor; and an overload protection device configured to block transfer of torque between the motor and the speed reducer in the case where an overload occurs.

In the configuration described above, an overload protection device that blocks a reverse input that has passed through the speed reducer is provided. Therefore, it is possible to provide a small and safe turning device that can avoid being damaged, even in the case where there is an abrupt reverse input, while suppressing the size of the overload protection device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates a turning device, a suspension mechanism, and a steered wheel according to an embodiment; and
FIG. 2 is a sectional view illustrating the turning device according to the embodiment.

### DETAILED DESCRIPTION OF EMBODIMENTS

A turning device according to an embodiment of the present invention will be described below with reference to the drawings. The numerical values, shapes, materials, constituent elements, positional relationship among the constituent elements, state of connection, steps, order of the steps, etc. are exemplary, and are not intended to limit the present invention. A plurality of inventions may be described in relation to one embodiment below. Constituent elements not described in a claim are described as optional for the invention according to the claim. The drawings are schematic diagrams that include exaggeration, omission, and scale adjustment as appropriate in order to illustrate the present invention, and may be different from the actual shapes, positional relationship, or scale.

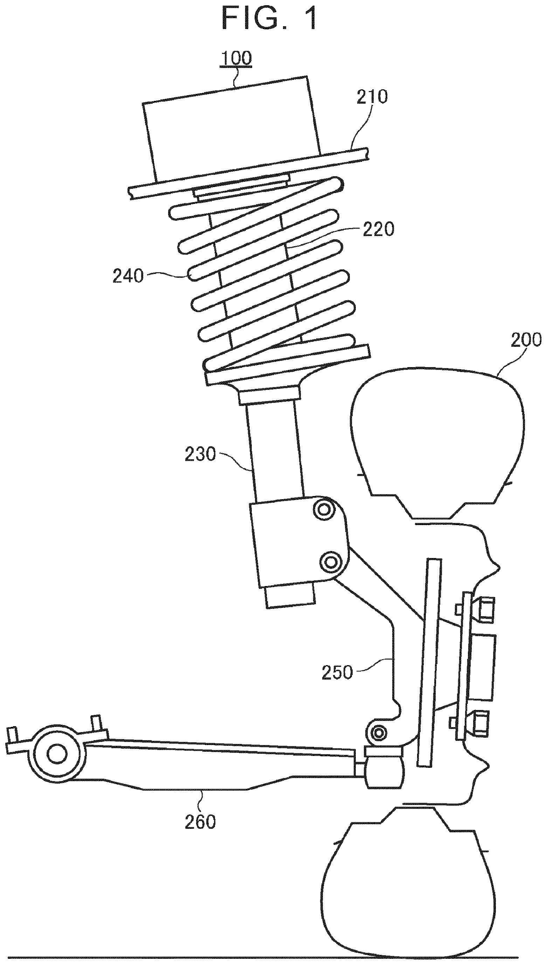

FIG. 1 illustrates a steered wheel and a suspension. A turning device 100 is a device that can independently steer a plurality of steered wheels 200. In the case of the present embodiment, the turning device 100 steers the steered wheel 200 via a suspension mechanism, for example. FIG. 1 illustrates a suspension mechanism of a strut type which is one type of suspension mechanisms. The turning device 100 is disposed between the strut suspension mechanism and a vehicle body 210 such as a tire house, and steers the steered wheel 200 by turning the steered wheel 200 about a strut shaft 230 together with a shock absorber 220 and a spring 240. The strut suspension mechanism further includes a knuckle 250 attached to the steered wheel 200, a lower arm 260 coupled to the lower portion of the knuckle 250, an articulated member that connects the parts so as to enable articulated operation, etc.

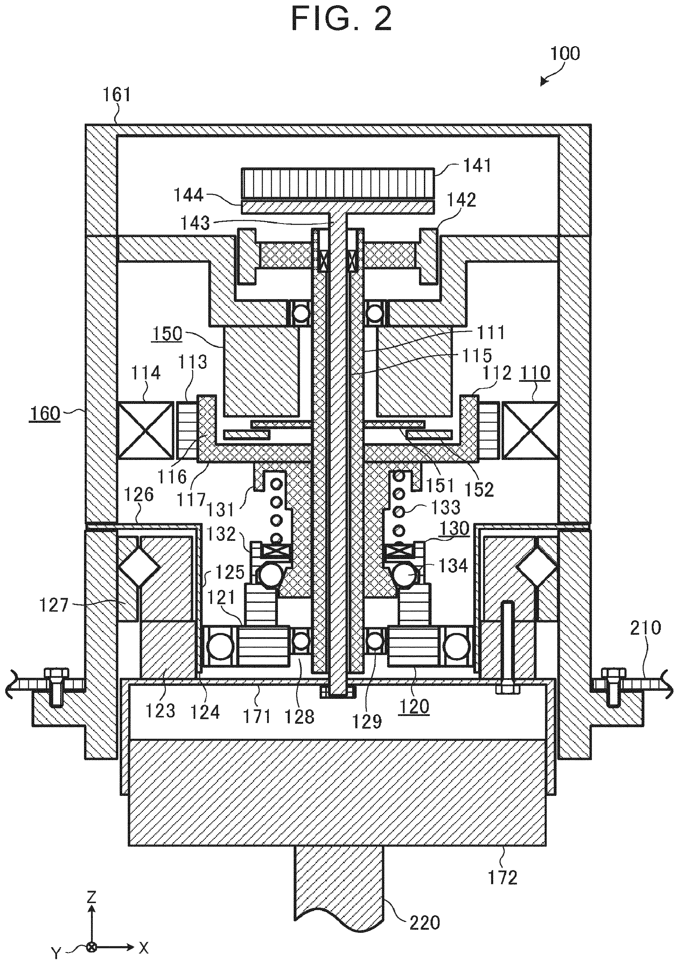

FIG. 2 is a sectional view illustrating the internal structure of the turning device. As illustrated in the drawing, the turning device 100 includes a motor 110, a speed reducer 120, and an overload protection device 130. In the case of the present embodiment, the turning device 100 includes a first rotation sensor 141 and a second rotation sensor 142.

The motor 110 is a drive source that generates a drive force for steering the steered wheel 200. In the case of the present embodiment, the motor 110 is a servo motor that includes a rotary shaft body 111, a rotor 112, magnets 113, and coils 114.

The rotary shaft body 111 is a bar-like rigid body that outputs the rotational drive force of the motor 110. The rotary shaft body 111 is a member having a length longer than the lengths of the rotor 112, the magnets 113, and the coils 114 in the axial direction (Z-axis direction in the drawing). Specifically, the rotary shaft body 111 extends from the vicinity of an output-side member 171 connected to an external gear 124 (to be discussed later) of the speed reducer 120, and penetrates the center portion of a wave generator 121, the overload protection device 130, and a brake 150. In the case of the present embodiment, the rotary shaft body 111 has a pipe shape penetrated by a hollow portion 115 in the axial direction.

The rotor 112 is a member that transfers torque generated between the magnets 113 and the coils 114 to the rotary shaft body 111. The shape of the rotor 112 is not specifically limited. In the case of the present embodiment, the rotor 112 includes a holding portion 116 having a short cylindrical shape that holds the magnets 113, and a connection portion 117 that connects between the holding portion 116 and the outer peripheral surface of the rotary shaft body 111. The holding portion 116 is disposed coaxially with the rotary shaft body 111. The connection portion 117 is integrally attached to one end portion of the holding portion 116 in the axial direction. The rotor 112 has a container shape. A brake disc 151 and a brake pad 152 for braking the rotary shaft body 111 are housed in the rotor 112. Consequently, the length of the turning device 100 in the axial direction can be suppressed.

The magnets 113 are members that generate torque that rotates the rotary shaft body 111 through interaction with a magnetic force generated by the coils 114, and are attached to the outer peripheral surface of the holding portion 116 of the rotor 112 side by side with each other in the circumferential direction. The magnets 113 are disposed such that N poles and S poles thereof are arranged in a predetermined pattern.

The coils 114 are members obtained by winding a conductive wire material that constitutes an electromagnet that generates a magnetic field that acts on the magnets 113. The directions of the winding axes of the coils 114 extend along the radial directions about the axis of the rotary shaft body 111. The coils 114 are disposed slightly on the outer side from a region in which the magnets 113 rotate, and disposed side by side in the circumferential direction so as to surround the magnets 113. The coils 114 are fixed to the inner peripheral surface of a housing 160 having a cylindrical shape. The coils 114 may include a core that concentrates the magnetic field.

The speed reducer 120 is a device connected to the rotary shaft body 111 of the motor 110 to amplify rotational torque generated by the motor 110 to rotational torque that can steer the steered wheel 200. The type of the speed reducer 120 is not specifically limited. In the case of the present embodiment, a wave speed reducer in which input and output shafts are coaxial is adopted as the speed reducer 120. The wave speed reducer includes a rigid cylindrical internal gear 123, the external gear 124 which has external teeth meshed with internal teeth of the internal gear 123 and which is tubular and flexible in the radial direction, and the wave generator 121 which is elliptical and which deforms the external gear 124 into an elliptical shape with respect to the internal gear 123 to mesh the two gears with each other at a plurality of locations and circulates the meshing positions along the internal gear 123.

In the case of the present embodiment, the external gear 124 is a so-called silk hat type, and includes a cylindrical portion 125 at one end portion of which external teeth are formed, and a flange portion 126 that projects radially outward at the other end portion of the cylindrical portion 125. The flange portion 126 is disposed on the input side with respect to the external teeth. The outer peripheral end portion of the flange portion 126 is fixed to the housing 160 to which the coils 114 are fixed. By disposing the external gear 124 in this manner, a first bearing 127 such as a cross roller bearing that fixes the internal gear 123 such that the internal gear 123 is rotatable with respect to the housing 160 can be disposed on the outer side with respect to the cylindrical portion 125 between the external teeth and the flange portion 126, and a part of the overload protection device 130 can be disposed on the inner side of the cylindrical portion 125. Thus, the length of the turning device 100 in the axial direction can be suppressed.

The wave generator 121 includes a through hole 128 provided coaxially with the rotary shaft body 111 to extend and penetrate the wave generator 121 in the axial direction (Z-axis direction in the drawing). The through hole 128 is penetrated by the rotary shaft body 111 which is an output shaft of the motor 110. The outer peripheral surface of the rotary shaft body 111 and the inner peripheral surface of the through hole 128 are connected by a second bearing 129. That is, rotational torque is not directly input to the wave generator 121 from the rotary shaft body 111, but rotational torque is input to the wave generator 121 via the overload protection device 130 which is attached so as to surround the rotary shaft body 111. In addition, the rotational axis of the wave generator 121 is determined by the rotary shaft body 111.

The internal gear 123 is fixed to the housing 160 via the first bearing 127 so as to be rotatable with respect to the housing 160, and functions as a member on the output side. The coils 114 are fixed to the housing 160. The output-side member 171 is fixed to the internal gear 123 so as to cover the output side. In addition, a universal joint 172 is attached to the output-side member 171. The internal gear 123 is connected to the strut shaft 230 of the suspension mechanism via the output-side member 171 and the universal joint 172, and outputs rotational torque for steering the steered wheel 200.

The overload protection device 130 is a so-called torque limiter that blocks transfer of torque between the motor 110 and the speed reducer 120 in the case where an overload occurs. In the case of the present embodiment, the overload protection device 130 includes: a first member 131 disposed coaxially with the rotary shaft body 111 and fixed to the outer peripheral surface of the rotary shaft body 111; a second member 132 attached to the outer peripheral edge portion of the through hole 128 of the wave generator 121 on the input side of the speed reducer 120; a biasing member 133 that biases the second member 132 against the first member 131; and spherical engagement members 134 disposed between the first member 131 and the second member 132 and strongly engaged with the first member 131 and the second member 132 when the second member 132 is pressed against the first member 131 by the biasing member 133.

In the overload protection device 130, normally, the first member 131 and the second member 132 are strongly coupled to each other via the engagement members 134 by the biasing force of the biasing member 133, and therefore rotational torque of the rotary shaft body 111 is transferred to the wave generator 121 of the speed reducer 120. On the other hand, in the case where an abrupt reverse input is caused such as when the steered wheel 200 is hit by a curb, and in the case where rotational torque of the reverse input from the strut shaft 230 which has been weakened via the speed reducer 120 excels the biasing force of the biasing member 133, the second member 132 idles with respect to the first member 131, and the reverse input is not transmitted to the first member 131, the rotary shaft body 111, etc.

The overload protection device 130 is disposed on the input side of the speed reducer 120, and therefore operates on rotational torque of a reverse input that has been reduced by the speed reducer 120. That is, a threshold value for rotational torque at which the overload protection device 130 idles can be reduced, and a small overload protection device 130 can be adopted. Thus, the overall size of the turning device 100 can be suppressed.

The first rotation sensor 141 is a sensor that detects the rotational angle on the output side of the speed reducer 120. The type of the first rotation sensor 141 is not specifically limited. The first rotation sensor 141 may be an optical rotary encoder. In the case of the present embodiment, the first rotation sensor 141 includes a detection shaft body 143. One end portion of the detection shaft body 143 penetrates the through hole 128 of the wave generator 121 of the speed reducer 120, and is connected to the rotational center of the output-side member 171 on the output side of the speed reducer 120. The detection shaft body 143 also penetrates the hollow portion 115 of the rotary shaft body 111. The other end portion of the detection shaft body 143 projects from the rotary shaft body 111. The first rotation sensor 141 detects, on the input side of the speed reducer 120 and on the opposite side of the motor 110 from the speed reducer 120, the rotational angle on the output side of the speed reducer 120 based on rotation of the detection shaft body 143, by detecting the rotational angle of a disk portion 144 provided at the other end portion of the rotary shaft body 111. The first rotation sensor 141 is disposed farther from the speed reducer 120 than the brake 150 and the second rotation sensor 142.

As described above, by disposing the first rotation sensor 141 at a position farther from the speed reducer 120 than the motor 110 using the detection shaft body 143, a plurality of rotation sensors can be concentrated at one location, which facilitates implementing dust suppression measures etc. for the rotation sensors. In addition, output signals from the rotation sensors can be concentrated at one location to be led out of the housing 160, which facilitates handling of signal wires outside the housing 160. Further, handling of electric wires can be facilitated by concentrating electric wires for power supply to the motor 110 and power lines for the brake 150 at the same position as the signal wires and leading the wires out of the housing 160. Use of a connector (not illustrated) that penetrates the housing 160 facilitates connection to and disconnection from electric wires outside the housing 160, and also enables dust suppression.

The second rotation sensor 142 is a sensor attached to the rotary shaft body 111 of the motor 110 to detect the rotational angle of the motor 110. The type of the second rotation sensor 142 is not specifically limited. In the case of the present embodiment, a resolver is adopted as the second rotation sensor 142. A resolver can accurately sense the rotational angle of the rotary shaft body 111 which rotates at a high speed.

As described above, by acquiring the rotational angle on the output side using the first rotation sensor 141 and acquiring the rotational angle on the input side using the second rotation sensor 142, the second rotation sensor 142 can be calibrated using information based on the first rotation sensor 141 in the case where information based on the second rotation sensor 142 is not in a predetermined relationship with respect to the information based on the first rotation sensor 141. Specifically, there occurs a discrepancy between the actual angle of the steered wheel 200 and information from the second rotation sensor 142 in the case where a reverse input occurs and the overload protection device 130 idles. On the other hand, the first rotation sensor 141 is mechanically connected to the steered wheel 200, and is not disconnected by the overload protection device 130. Thus, information from the first rotation sensor 141 indicates the actual angle of the steered wheel 200. Hence, a calibration is made based on the information from the first rotation sensor 141 such that the information from the second rotation sensor 142 coincides with the actual angle of the steered wheel 200.

The housing 160 is a box-shaped member that houses the motor 110, the overload protection device 130, at least the input side of the speed reducer 120, the second rotation sensor 142, and the first rotation sensor 141 sequentially in this order. The shape of the housing 160 is not specifically limited. In the case of the present embodiment, the housing 160 has a cylindrical shape, and a portion of the housing 160 in the vicinity of the first rotation sensor 141 is closed by a lid member 161. The housing 160 is fixed to the vehicle body 210 such that the motor 110, the overload protection device 130, at least the input side of the speed reducer 120, the second rotation sensor 142, and the first rotation sensor 141 are disposed on the outer side with respect to a portion of the vehicle body 210 that forms a so-called tire house that houses the steered wheel 200 and the suspension mechanism. In the case of the present embodiment, the housing 160 also houses the internal gear 123 which is disposed on the output side of the speed reducer 120 and a part of the output-side member 171, and the internal gear 123 is disposed on the outer side with respect to the vehicle body 210. While the housing 160 is attached so as to project outward from the vehicle body 210, the housing 160 is not exposed to the outside to be visually recognizable since the housing 160 is covered by a hood of the vehicle.

As described above, in the turning device 100 according to the present embodiment, the overload protection device 130 is connected between the motor 110 and the speed reducer 120. Thus, in the case where there is a reverse input from the steered wheel 200, damage to the turning device 100 can be suppressed with the overload protection device 130 operating to interrupt transfer of rotational torque between the motor 110 and the speed reducer 120.

Since the overload protection device 130 operates based on rotational torque of a reverse input that has been reduced by the speed reducer 120, a threshold value for rotational torque as to whether the overload protection device 130 operates can be set to be small. Thus, a small overload protection device 130 can be adopted, and the size, in particular the thickness in the axial direction, of the turning device 100 can be reduced.

By sensing the rotational angle on the output side of the speed reducer 120 with the first rotation sensor 141, which is disposed at a position on the input side, using the detection shaft body 143, the length of the turning device 100 in the axial direction can be shortened compared to the case where a rotational angle sensor is provided on the output side of the speed reducer 120.

A high dust suppression performance can be obtained, since the motor 110, the overload protection device 130, the speed reducer 120, the first rotation sensor 141, and the second rotation sensor 142 are housed in the housing 160 which is disposed above the vehicle body 210 which defines the tire house in which the steered wheel 200 is disposed and which is attached to the vehicle body 210.

A harness can be handled easily, since electric wires for exchange of electric signals and power between the inside and the outside of the housing 160 can be concentrated at one location.

The second rotation sensor 142 can be calibrated to recover an appropriate steered angle, since the actual steered angle of the steered wheel 200 can be sensed by the first rotation sensor 141 even after the overload protection device 130 operates because of a reverse input.

The present invention is not limited to the embodiment described above. For example, the constituent elements described herein may be combined as desired, or some of the constituent elements may be excluded, to implement different embodiments of the present invention. In addition, the present invention also includes modifications obtained by a person skilled in the art making various conceivable changes to the embodiment described above without departing from the scope and spirit of the present invention, that is, the meaning of the language used in the claims.

For example, while the turning device 100 according to the embodiment described above is described as a device that steers the steered wheel 200 via a suspension mechanism including the shock absorber 220 and the strut shaft 230, the turning device 100 may steer the steered wheel 200 via a suspension mechanism of a different type, or may steer the steered wheel 200 via a steering operation mechanism separately from the suspension mechanism.

A wave gear mechanism is described as an example of the speed reducer 120 in which an input shaft and an output shaft are disposed coaxially. However, the speed reducer 120 is not limited thereto, and the speed reducer 120 may utilize a planetary gear mechanism, for example.

While the turning device 100 includes the brake 150 in the example, the turning device 100 may not include the brake 150.

An electronic control unit (ECU) for controlling steering may be housed in the housing 160.

A part or all of the turning device 100 may be disposed inside the tire house.

The present invention is applicable to vehicles etc. in which steered wheels are steered independently, such as automobiles, construction machines, and agricultural machines.

## Claims

1. A turning device (100) **characterized by** comprising:
a motor (110) configured to generate a drive force for independently steering a steered wheel (200);
a speed reducer (120) connected to a rotary shaft body (111) of the motor (110); and
an overload protection device (130) configured to block transfer of torque between the motor (110) and the speed reducer (120) in the case where an overload occurs.

2. The turning device (100) according to claim 1, **characterized by** further comprising:
a first rotation sensor (141) configured to detect a rotational angle on an output side of the speed reducer (120); and
a second rotation sensor (142) configured to detect a rotational angle of the rotary shaft body (111) of the motor (110).

3. The turning device (100) according to claim 2, **characterized in that**:
the speed reducer (120) includes a wave generator (121) that has a through hole that penetrates the wave generator (121) in an axial direction; and
the first rotation sensor (141) includes a detection shaft body (143) that penetrates the through hole to be connected to the output side of the speed reducer (120), and is configured to detect, on an input side of the speed reducer (120), the rotational angle on the output side of the speed reducer (120) based on the detection shaft body (143).

4. The turning device (100) according to claim 3, **characterized in that**:
the rotary shaft body (111) includes a hollow portion (115) that penetrates the rotary shaft body (111) in the axial direction;
the detection shaft body (143) also penetrates the hollow portion (115) of the rotary shaft body (111); and
the first rotation sensor (141) is disposed on an opposite side of the motor (110) from the speed reducer (120).

5. The turning device (100) according to claim 3 or 4, **characterized in that**
the motor (110), the overload protection device (130), the input side of the speed reducer (120), the first rotation sensor (141), and the second rotation sensor (142) are disposed on an outer side with respect to a portion of a vehicle body that houses the steered wheel (200).

6. The turning device (100) according to claim 5, **characterized by** further comprising
a housing (160) that houses the motor (110), the overload protection device (130), the input side of the speed reducer (120), the second rotation sensor (142), and the first rotation sensor (141), and that is fixed to the vehicle body, wherein
respective electric wires connected to the motor (110), the second rotation sensor (142), and the first rotation sensor (141) are concentrated and led out through one location of the housing (160).

7. The turning device (100) according to any one of claims 2 to 6, **characterized in that**
the second rotation sensor (142) is configured to be calibrated using information based on the first rotation sensor (141) in the case where information based on the second rotation sensor (142) is not in a predetermined relationship with respect to the information based on the first rotation sensor (141).
